# EUROPEAN PATENT SPECIFICATION

(11) **EP 2 554 413 B1**
(45) Date of publication and mention of the grant of the patent: **12.03.2014**
(21) Application number: 11765594.4
(22) Date of filing: 30.03.2011
(51) Int. Cl.: B60H 1/22, B60H 1/32, B60H 1/00

(54) **HEAT PUMP AIR CONDITIONING SYSTEM FOR VEHICLE**
WÄRMEPUMPEN-KLIMAANLAGENSYSTEM FÜR EIN FAHRZEUG
SYSTÈME DE CLIMATISATION À POMPE À CHALEUR POUR VÉHICULE

(30) Priority: 31.03.2010 JP 2010083744
(43) Date of publication of application: 06.02.2013
(73) Proprietor: Honda Motor Co., Ltd., Minato-ku Tokyo 107-8556 (JP)
(72) Inventor: HAYASHI Kengo, Wako-shi Saitama 351-0193 (JP)
(74) Representative: Herzog, Markus
(86) International application number: PCT/JP2011/057943
(87) International publication number: WO 2011/125694

(56) References cited:
- JP-A- 5 155 245
- JP-A- 2007 153 055
- JP-A- 2009 113 610
- JP-A- 2009 149 288
- US-A- 5 299 431
- US-A1- 2009 113 913

## Description

### Technical Filed

The present invention relates to a heat pump air conditioning system for a vehicle, capable of dehumidification heating operation and dehumidification cooling operation.

### Background Art

In a usual vehicle, heating inside the cabin of the vehicle is often performed under environment where the temperature outside the vehicle is low in a winter season or the like. In this situation, even it is attempted to heat inside the cabin, if the humidity inside the cabin is high, as the outside of the vehicle is cold, a phenomenon occurs that condensation forms on a window of the vehicle to fog it immediately after a warm air contacts the window. Accordingly, a state often occurs that an air conditioning system for a vehicle performs dehumidification heating.

However, when a conventional heat pump air conditioning system is used for such a vehicle, it is difficult to appropriately adjust the discharge temperature (blowing temperature), which causes a problem of making the discharge temperature higher than necessary in dehumidification heating. In response to this situation, for a heat pump air conditioning system disclosed by Patent Literature 1, a technology is presented in which, when a blowing temperature is determined to be higher than a predetermined value in dehumidification heating, the dehumidification heating operation is switched to cooling operation, and further, current is applied to a PTC heater provided in advance.

### Background Art Document

### Patent Literature

Patent Literature 1: JP 2009-202735 A

US 5 299 431 discloses a system according to the preamble of claim 1.

### Disclosure of the Invention

### Problems to be Solved by the Invention

However, in the technology disclosed by Patent Literature 1, electrical power is consumed to be supplied to an electric heater (PTC heater) and to perform cooling operation, which may cause a drop in the electrical efficiency of the entire vehicle.

The present invention solves the above conventional problem, and an object of the invention is to provide a heat pump air conditioning system, for a vehicle, that enables efficient use of electrical power and setting an optimum discharge temperature.

### Means for Solving the Problems

According to the present invention, a heat pump air conditioning system for a vehicle includes: a refrigerant compressor; a first heat exchanger, for heat discharge, that performs heat exchange between a refrigerant discharged from the refrigerant compressor and a heat medium; a second heat exchanger, for heat discharge, that is disposed downstream of the first heat exchanger and performs heat exchange between the refrigerant discharged from the refrigerant compressor and external atmospheric air; a depressurizing unit that is disposed downstream of the second heat exchanger and decreases a pressure of the refrigerant; a third heat exchanger, for heat absorption, that is disposed downstream of the depressurizing unit and performs heat exchange between a heat source and the refrigerant; a fourth heat exchanger, for heat absorption, that is disposed on an upstream side of the first heat exchanger with respect to a flow of the heat medium introduced to the first heat exchanger; a cooling-heating switching unit for switching between a flow of the refrigerant and the heat medium in cooling operation and a flow of the refrigerant and the heat medium in heating operation; a first blower for sending the heat medium to the first heat exchanger and the fourth heat exchanger; a second blower for sending the heat medium from the heat source to the third heat exchanger; and a control section for controlling the refrigerant compressor, the cooling-heating switching unit, the first blower, and the second blower, wherein, the control section performs collaborated operation of the second blower in association with the first blower in dehumidification heating operation in which the refrigerant passes through the fourth heat exchanger after the refrigerant passes through the third heat exchanger, and if a discharge temperature of the heat medium from the first heat exchanger is higher than a first predetermined temperature and a rotation speed of the refrigerant compressor is lower than a predetermined rotation speed, the control section releases the collaborated operation between the first blower and the second blower to adjust an electrical power for the second blower and thereby makes the discharge temperature become lower than a second predetermined temperature.

Thus, the flow rate of the second blower is adjusted in association with the flow rate of first blower in normal dehumidification heating operation, however, in case that conditions that the discharge temperature of the heat medium is higher than the predetermined temperature (excessive capacity) and the rotation speed of the refrigerant compressor is lower than the predetermined value (for example, the rotation speed of the refrigerant compressor is the minimum) have occurred, the collaborated operation between the second blower and the first blower is released and the electrical power for the second blower is independently controlled. In such a manner, as the absorption amount at the third heat exchanger can be decreased, the heat discharge amount at the first heat exchanger can be decreased, and it is thereby possible to adjust the discharge temperature from the first heat exchanger to an optimum temperature.

That is, as a decrease in the heat absorption amount at the third heat exchanger decreases the heat absorption amount at the fourth heat exchanger decreases, the heat discharge amount at the first heat exchanger decreases. Accordingly, the temperature of the heat medium discharged from the first heat exchanger decreases.

Further, a heat absorption amount is ensured by heat absorption at the third heat exchanger and the fourth heat exchanger, and the flow rated at the first blower is not decreased. Accordingly, a heat discharge amount at the first heat exchanger and a dehumidification amount at the fourth heat exchanger can be ensured. Thus, dehumidification heating operation is also enabled even by a system common to cooling operation and heating operation.

Still further, without using an electrical heater, in a state, for example, of minimizing the output from the refrigerant compressor, as it is also possible to restrict the electrical power for the second blower 90 to a minimum limit, it is possible to reduce the consumption electrical power to thereby effectively use electrical power.

Further, in the heat pump air conditioning system for a vehicle, if an external atmospheric temperature is within a first predetermined range in dehumidification cooling operation, the control section switches the dehumidification cooling operation to the dehumidification heating operation to make the refrigerant flow through the third heat exchanger and adjusts the electrical power for the second blower, to thereby control the discharge temperature to be within a second predetermined range.

Thus, it is possible, by dehumidification heating operation, to respond even to a region that would be responded conventionally by dehumidification cooling operation which requires control of a cooling-heating switching unit (the air mix damper in the later-described embodiment).

### Advantage of the Invention

According to the present invention, it is possible to provide a heat pump air conditioning system, for a vehicle, that enables efficient use of electrical power and setting an optimum discharge temperature.

### Brief description of the Drawings

FIG. 1 is an entire configuration diagram illustrating operation in dehumidification heating operation of a heat pump air conditioning system, for a vehicle, in the present embodiment;
FIG. 2 is an entire configuration diagram illustrating operation in dehumidification cooling operation of the heat pump air conditioning system, for a vehicle, in the present embodiment;
FIG. 3 is a flowchart illustrating operation in dehumidification heating operation of the heat pump air conditioning system, for a vehicle, in the present embodiment;
FIG. 4 is a flowchart illustrating operation in dehumidification cooling operation of the heat pump air conditioning system, for a vehicle, in the present embodiment; and
FIGS. 5A and 5B show external atmospheric temperature ranges to which the respective operation modes are applicable, wherein FIG. 5A shows the present embodiment while FIG. 5B shows a comparative example.

### Embodiment for Carrying Out the Invention

An embodiment according to the present invention will be described below, referring to the drawings. A heat pump air conditioning system (abbreviated as an air conditioning system) F1, for a vehicle, in the present embodiment can be applied to a vehicle V, such as an electric vehicle (EV), a fuel cell vehicle (FCV), a hybrid electric vehicle (HEV) or the like.

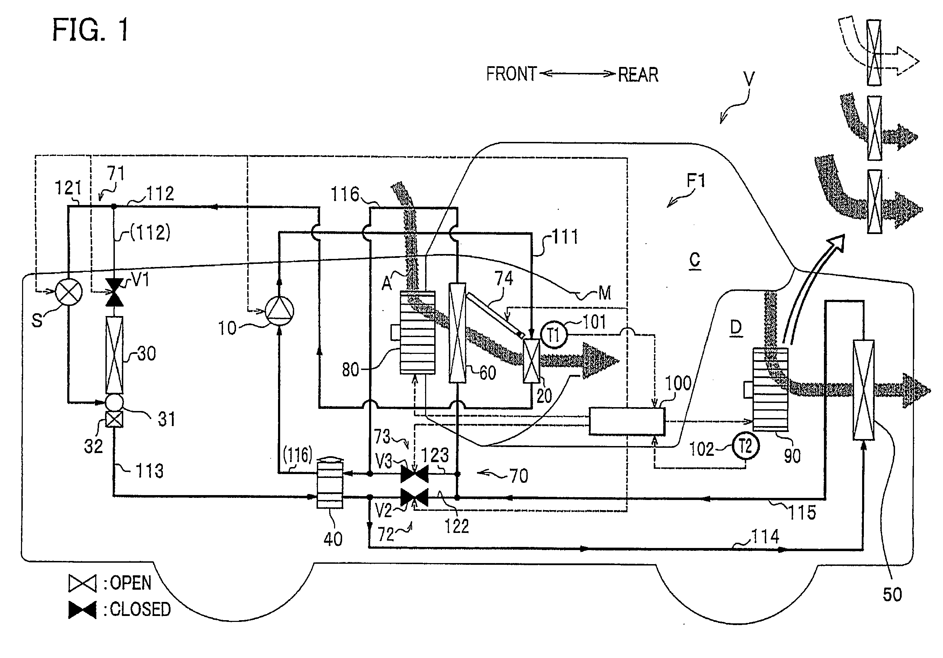

As shown in FIG. 1, the air conditioning system F1 in the present embodiment is configured with a refrigerant compressor 10, a first heat exchanger 20 for heat discharge, a second heat exchanger 30 for heat discharge, an expansion valve (depressurizing unit) 40, a third heat exchanger 50 for heat discharge, a fourth heat exchanger 60 for heat discharge, a cooling-heating switching unit 70, a first blower 80, a second blower 90, a control section 100, and the like. In the present embodiment, piping shown by thick lines refers to the flow of refrigerant.

The refrigerant compressor 10 is arranged such that the refrigerant compressor 10 is driven by the power of a motor (or an engine), absorbs and compresses refrigerant, and sends by pressure the refrigerant (gas refrigerant) with a high temperature and a high temperature to the first heat exchanger 20 through a pipe 111.

The first heat exchanger 20 is a so-called refrigerant heater and is connected to the refrigerant compressor 10 through the pipe 111. The first heat exchanger 20 has a function to heat air conditioning air A (heat medium, external atmospheric air) by discharge of the heat of the gas refrigerant with a high temperature and a high pressure sent from the 10, the air conditioning air A having been taken in from outside the vehicle V.

The second heat exchanger 30 is a heat exchanger for heat discharge provided on the front end side of the vehicle V, and has a function to cool the refrigerant by external atmospheric air taken in from the front of the vehicle V. In the second heat exchanger 30, the gas refrigerant from the refrigerant compressor 10 is condensed (cooled) and becomes liquid refrigerant. The second heat exchanger 30 is connected to the first heat exchanger 20 through the pipe 112.

To the second heat exchanger 30, a receiver tank 31 and a sub-condenser 32 are serially connected on the downstream side of the second heat exchanger 30. A pipe 112 on the inlet side of the second heat exchanger 30 is provided with an electromagnetic valve V1 that is opened and closed by the control section 100. Incidentally, without being limited to a condenser unit configured such with the second heat exchanger 30, the receiver tank 31, and the sub-condenser 32, it is also possible to use an existing sub-cool condenser.

The receiver tank 31 has a function to separate the refrigerant taken out from the second heat exchanger 30 into liquid refrigerant and gas refrigerant (gas-liquid separation function), and sends out only the liquid refrigerant to the downstream side. The receiver tank 31 functions as a buffer section for compensating a short of refrigerant.

The sub-condenser 32 functions as a sub-cool section in heating operation, and further cools the refrigerant cooled by the first heat exchanger 20 to make the refrigerant become a complete liquid refrigerant. Further, the sub-condenser 32 also functions as a sub-cool section for cooling the refrigerant in cooling operation, too.

A second heat exchanger bypass unit 71 for bypassing the second heat exchanger 30 is provided. The second heat exchanger bypass unit 71 has a second heat exchanger bypass pipe 121, wherein the end portion of the second heat exchanger bypass unit 71 on the upstream side is connected to the pipe 112 on the upstream side of the electromagnetic valve V1, and the end portion of the second heat exchanger bypass unit 71 on the downstream side is connected to the receiver tank 31. The second heat exchanger bypass pipe 121 is provided with a throttle member S to generate a pressure loss. The throttle member S is formed such as to have a pressure loss higher than the pressure loss at the second heat exchanger 30 in order that, even when the electromagnetic valve V1 is opened, the refrigerant does not flow to the second heat exchanger bypass pipe 121 and flows to the second heat exchanger 30.

The opening degree of an expansion valve 40 can be changed, for example, depending on the temperature/pressure of the refrigerant, so that the expansion valve 40 has a function to change the flow rate of the refrigerant, depending on a detected temperature/pressure (a function to decrease the pressure of the refrigerant). Further, the expansion valve 40 is connected to the sub-condenser 32 through a pipe 113. The expansion valve 40 is not limited to a temperature/pressure dependent valve, and may be an electromagnetic valve for adjusting the flow rate of the refrigerant by open-close control of the valve.

The third heat exchanger 50 is a heat absorber for the refrigerant to exchange heat with air conditioning air A (heat medium, heat source) emitted from the vehicle interior C, and is disposed, for example, in the luggage room D (for example, a trunk room) of the vehicle V, at the vehicle rear part from where the air conditioning air is emitted outside the vehicle. The third heat exchanger 50 prevents the heat inside the luggage room D from being wastefully emitted outside.

The fourth heat exchanger 60 is a heat absorber that is disposed on a flow path of air conditioning air A introduced into the vehicle interior C, and performs heat exchange between air conditioning air A (external atmospheric air) taken in from outside the vehicle and the refrigerant. The fourth heat exchanger 60 is disposed on the upstream side of the first heat exchanger 20 with respect to the flow of air conditioning air A.

The refrigerant inlet of the third heat exchanger 50 is connecter with the refrigerant outlet of the expansion valve 40 through a pipe 114, and the refrigerant outlet of the third heat exchanger 50 is connected to the refrigerant inlet of the fourth heat exchanger 60 through a pipe 115. Further, the refrigerant outlet of the fourth heat exchanger 60 is connected to the refrigerant compressor 10 through a pipe 116 and the expansion valve 40.

The cooling-heating switching unit 70 switches the flow of the refrigerant and flow of air conditioning air A in cooling operation (in dehumidification cooling operation), and the flow of the refrigerant and air conditioning air A in heating operation (in dehumidification heating operation). The cooling-heating switching unit 70 is configured with the above-described second heat exchanger bypass unit 71, a third heat exchanger bypass unit 72, a fourth heat exchanger bypass unit 73, and an air mix damper 74.

The third heat exchanger bypass unit 72 is configured with a third heat exchanger bypass pipe 122 and an electromagnetic valve V2. The third heat exchanger bypass pipe 122 is configured such that the refrigerant flows bypassing the third heat exchanger 50, wherein the upstream end is connected to the pipe 114 and the downstream end is connected to the pipe 115. The electromagnetic valve V2 is provided on the third heat exchanger bypass pipe 122.

The fourth heat exchanger bypass unit 73 is configured with a fourth heat exchanger bypass pipe 123 and an electromagnetic valve V3. The fourth heat exchanger bypass pipe 123 is configured such that the refrigerant flows bypassing the fourth heat exchanger 60, and the upstream end is connected to a pipe 115, which is on the downstream side of the third heat exchanger bypass unit 72 while the downstream end is connected to a pipe 116 that is between the fourth heat exchanger and the expansion valve 40. The electromagnetic valve V3 is provided on the fourth heat exchanger bypass pipe 123.

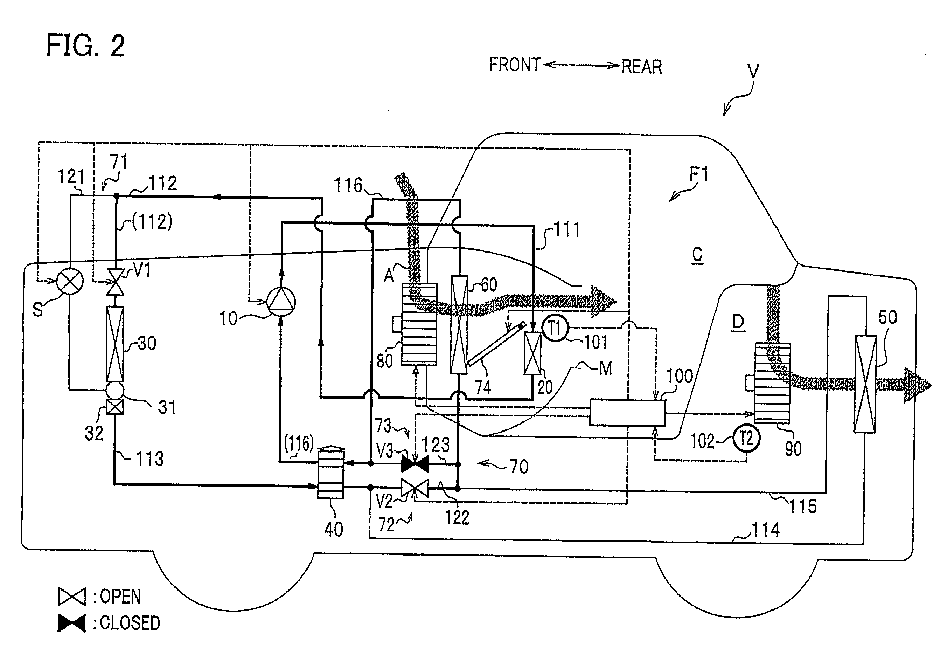

The air mix damper 74 is disposed on the upstream side (the deeper side) of a blowing opening M for air conditioning air A introduced into the vehicle interior C, and is disposed in the space (on the flow path) between the first heat exchanger 20 and the fourth heat exchanger 60. In heating operation (in dehumidification heating operation), the air mix damper 74 is controlled to fully open (see FIG. 1), and after air conditioning air A to be introduced into the vehicle interior C passes through the fourth heat exchanger 60, the flow of the air conditioning air A is controlled to pass through the first heat exchanger 20. In cooling operation (in dehumidification cooling operation), the air mix damper 74 is controlled to fully close, and after air conditioning air A to be introduced into the vehicle interior C passes through the fourth heat exchanger 60, the air conditioning air A is introduced into the vehicle interior C (see FIG. 2).

The first blower 80 is disposed on the upstream side of the fourth heat exchanger 60 with respect to the flow of air conditioning air A, and is configured with an air blower for blowing air conditioning air A (external atmospheric air) taken in from outside the vehicle onto the surface of the fourth heat exchanger 60. Air conditioning air A discharged from the first blower 80 passes through between fins provided around a tube, not shown, that forms the fourth heat exchanger 60, and thereby exchanges heat with the refrigerant.

The second blower 90 is disposed on the upstream side of the third heat exchanger 50 with respect to the flow of air conditioning air, the third heat exchanger 50 being disposed inside the luggage room D of the vehicle V, and is configured with an air blower that blows air conditioning air A onto the surface of the third heat exchanger 50, the air conditioning air A having been introduced from inside the vehicle interior C. The second blower 90 is configured such as to be able to adjust the blowing air flow rate step by step, as shown in FIG. 1, when predetermined conditions are satisfied. In the diagram shown at the right top of FIG. 1, the state shown at the top of the column represents a state that air blowing is stopped, and the states shown at the middle and the bottom of the column represent states that the respective flow rates can be adjusted. The predetermined conditions described above will be described later.

The control section 100 controls opening and closing of the electromagnetic valves V1 to V3, and also controls opening and closing of the air mix damper 74 so as to control the flow of the refrigerant and the flow of air conditioning air A in respective operations of dehumidification heating operation, dehumidification cooling operation (dry operation or dehumidification operation), heating operation, and cooling operation.

Further, the control section 100 is connected to a discharge temperature sensor 101 for detection of the discharge temperature T1 at the blowing opening M through which air conditioning air A is introduced into the vehicle interior C, and an external atmospheric temperature sensor 102 for detection of the external atmospheric temperature T2.

The respective operations in dehumidification heating operation and dehumidification cooling operation (also referred to as in dry operation or in dehumidification operation) of the air conditioning system F1 will be described below. FIG. 1 shows the flow of the refrigerant and air conditioning air A in dehumidification heating operation, wherein the electromagnetic valves V1, V2, and V3 are all closed while the air mix damper 74 is fully open. FIG. 2 shows the flow of the refrigerant and air conditioning air A in dehumidification cooling operation, wherein the electromagnetic valves V1 and V3 are closed, the electromagnetic valve V2 is open, and the air mix damper 74 is fully closed.

### (Operation in Dehumidification Heating Operation)

As shown in FIG. 1, when the refrigerant compressor 10 is driven, the refrigerant (gas refrigerant) with a high temperature and a high pressure compressed by the refrigerant compressor 10 is introduced to the first heat exchanger 20 through the pipe 111. Herein, as the air mix damper 74 is fully open, air conditioning air (heat medium, external atmospheric air) A taken in from outside the vehicle passes through the first heat exchanger 20. Further, when the refrigerant compressor 10 is driven, the first blower 80 and the second blower 90 are driven. The second blower 90 operates in association with the first blower 80.

The refrigerant introduced to the first heat exchanger 20 exchanges heat with air conditioning air A. That is, the temperature of air conditioning air A rises by the gas refrigerant with a high temperature and a high pressure. On the other hand, the refrigerant is cooled by air conditioning air A (for example, cold external atmospheric air) to be condensed, and thus turns from gas refrigerant into liquid refrigerant.

The liquid refrigerant having passed through the first heat exchanger 20 passes through the pipe 112, the second heat exchanger bypass pipe 121 and the throttle member S and thus introduced to the receiver tank 31 and the sub-condenser 32, bypassing the second heat exchanger 30.

The refrigerant depressurized by the throttle member S is separated into gas and liquid by the receiver tank 31, and the liquid refrigerant is introduced from the receiver tank 31 to the sub-condenser 32. Incidentally, by providing the throttle member S, the expansion valve 40 that is set suitably for cooling operation can also be used for dehumidification heating operation (heating operation).

In the sub-condenser 32, the liquid refrigerant is further cooled to become a complete liquid refrigerant. Incidentally, the process by the receiver tank 31 and the sub-condenser 32 serves as a so-called sub-cool section (sub-cool region).

The liquid refrigerant having passed through the sub-condenser 32 passes through the pipe 113 and is introduced to the expansion valve 40. At the expansion valve 40, the liquid refrigerant is depressurized to become a refrigerant in a state of mixture of liquid and gas, and is introduced through the pipe 114 to the third heat exchanger 50.

The third heat exchanger 50 performs heat exchange between air conditioning air A introduced from the vehicle interior C and the refrigerant. That is, when the refrigerant passes through the third heat exchanger 50, the refrigerant absorbs the heat that air conditioning air A has and the specific enthalpy of the refrigerant increases.

The refrigerant having passed through the third heat exchanger 50 is introduced through the pipe 115 to the fourth heat exchanger 60. At the fourth heat exchanger 60, heat exchange is performed between air conditioning air (external atmospheric air) A introduced from outside the vehicle and the refrigerant, and the heat of air conditioning air A is absorbed. Thus, moisture contained in air conditioning air (external atmospheric air) A taken in from outside the vehicle is removed, and dehumidification processing is thereby performed. Air conditioning air A having been subjected to dehumidification is heated by the heat discharge from the first heat exchanger 20, and is thereafter introduced to the vehicle interior C. The refrigerant, whose heat has been absorbed by the fourth heat exchanger 60, passes through the pipe 117 and the expansion valve 40, and returns to the refrigerant compressor 10.

Incidentally, in heating operation, the electromagnetic valve V3 is opened by the control section 100, and the refrigerant thereby bypasses the fourth heat exchanger 60. Accordingly, dehumidification processing of air conditioning air A is not performed.

### (Dehumidification Cooling Operation)

As shown in FIG. 2, in dehumidification cooling operation, when the refrigerant compressor 10 is driven, the refrigerant compressed by the refrigerant compressor 10 is introduced through the pipe 111 to the first heat exchanger 20. Incidentally, in dehumidification cooling operation, as the air mix damper 74 is set to be fully closed, air conditioning air A does not pass through the first heat exchanger 20. Accordingly, air conditioning air A is not heated by the gas refrigerant having a high temperature and a high pressure.

The gas refrigerant with a high temperature and a high pressure having passed through the first heat exchanger 20 passes through the pipe 112 and is introduced to the second heat exchanger 30. In the second heat exchanger 30, the gas refrigerant is cooled by external atmospheric air, which is introduced from the front of the vehicle V, and is thus condensed to become a liquid refrigerant.

The refrigerant (liquid refrigerant) having passed through the second heat exchanger 30 is introduced to the receiver tank 31, wherein the refrigerant having not completely been separated is separated into a liquid refrigerant and a gas refrigerant, and only the liquid refrigerant is introduced to the sub-condenser 32. Then, in the sub-condenser 32, the liquid refrigerant is further cooled, and is introduced thereafter through the pipe 113 to the expansion valve 40.

At the expansion valve 40, the liquid refrigerant is depressurized to become a refrigerant in a mixture of liquid refrigerant and gas refrigerant. The refrigerant having passed through the expansion valve 40 bypasses the third heat exchanger 50 by the third heat exchanger bypass pipe 122, and is introduced to the fourth heat exchanger 60. In such a manner, in dehumidification cooling operation, as it is not necessary to take in heat from outside by the third heat exchanger 50, an arrangement is made such that the third heat exchanger 50 is bypassed.

In the fourth heat exchanger 60, heat exchange is performed between air conditioning air (external atmospheric air) A to be introduced into the vehicle interior C and the refrigerant, and the heat of the air conditioning air A is thereby absorbed. Thus, the moisture contained in air conditioning air (external atmospheric air) A is removed and dehumidification is thus performed. As the air mix damper 74 is fully closed then, the air conditioning air A having been subjected to dehumidification is introduced into the vehicle interior C without being heated by the first heat exchanger 20. The refrigerant, whose heat has been absorbed at the fourth heat exchanger 60, passes through the pipe 117 and the expansion valve 40, and returns to the refrigerant compressor 10.

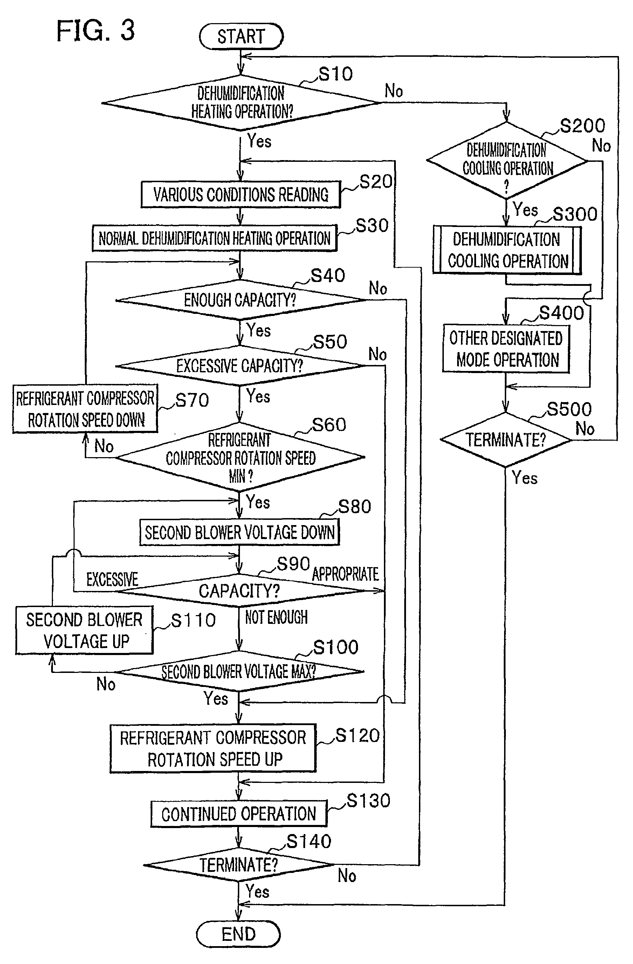

The procedure of collaborated operation by the first blower 80 and the second blower 90 and release of the collaborated operation in dehumidification heating operation of the heat pump air conditioning system F1 in the present embodiment will be described below, referring to FIG. 3.

As shown in FIG. 3, in step S10, the control section 100 determines whether or not dehumidification heating operation is performed. Whether or not dehumidification heating operation is performed may be determined by detection that a driver has switched a mode change switch to the dehumidification heating mode, or may be determined by a fact that the dehumidification heating mode has been set in a total control of the air conditioning system F1.

If the control section 100 has determined that dehumidification heating operation is performed (Yes), the process proceeds to step S20 to read various conditions and store the conditions into a memory. Herein, various conditions refer to the discharge pressure (discharge refrigerant pressure), the discharge temperature (blowing temperature) T1 and the like of the refrigerant compressor 10.

Then, the process proceeds to step S30, and the control section 100 performs normal dehumidification heating operation. Normal dehumidification heating operation refers to, as shown in FIG. 1, performing dehumidification heating operation, by collaborated operation in which the first blower 80 and the second blower 90 are driven in collaboration between the respective rotation speeds with increase or decrease by voltage adjustment or the like, in other words, collaborated operation in which if the supply voltage to the first blower 80 is increased, the supply voltage to the second blower 90 is also increased with a predetermined rate, and in reverse, if the supply voltage to the first blower 80 is decreased, the supply voltage to the second blower 90 is also decreased with a predetermined rate.

The, the process proceeds to step S40, and the control section 100 determines whether or not the capacity of dehumidification heating operation is enough. Whether or not the capacity is enough can be determined, for example, depending on whether or not the discharge temperature T1, detected by a discharge temperature sensor 101, of air conditioning air A from the blowing opening M is exceeding a predetermined value. The predetermined value herein is, for example, 20°C.

In step S40, if the control section 100 determines that the capacity is enough (Yes, the discharge temperature is higher than or equal to 20 °C), the process proceeds to step S50, and the control section 100 determines whether or not the capacity of dehumidification heating operation is excessive. Whether or not the capacity is excessive can be determined, for example, depending on whether or not the discharge temperature T1 of air conditioning air A discharged from the blowing opening M is higher than or equal to a predetermined value (the first predetermined value). The predetermined value herein refers to a high temperature at which passengers in the vehicle interior C start feeling uncomfortable, and is, for example, 50°C.

If the control section 100 determines that the capacity is not enough (No, the discharge temperature T1 is lower than 20°C) in step S40, the process proceeds to step S120, and the rotation speed of the refrigerant compressor 10 is increased (UP). Thus, more refrigerant with a high temperature and a high pressure is introduced to the first heat exchanger 20, the heat discharge amount at the first heat exchanger 20 accordingly increases, and it is thus possible to increase the discharge temperature T1 of air conditioning air A to be introduced from the blowing opening M into the vehicle interior C.

Then, the process proceeds to step S130, the control section 100 continues operation at the rotation speed of the refrigerant compressor 10 having been set in step S120, and the process proceeds to step S140. In step S140, the control section 100 determines whether or not the operation of the air conditioning system F1 by the driver is terminate, and if it is determined that the operation is terminated (S140, Yes), the control section 100 terminates process, and if it is determined that the operation is not terminated yet (S140, No), the process returns to step S20.

In step S50, if the control section 100 determines that the capacity is excessive (Yes, the discharge temperature T1 is 50°C or higher.), then the process proceeds to step S60. In step S50, if the control section 100 determines that the capacity is not excessive (No, the discharge temperature T1 is lower than 50°C.), in other words, it is determined that the discharge temperature T1 is in an appropriate range, the process proceeds to step S130, and the control section 100 continues operation, and then the process proceeds to step S140.

Further, in step S60, the control section 100 determines whether or not the rotation speed of the refrigerant compressor 10 is the minimum value (a predetermined rotation speed), and if it is determined that the rotation speed is not the minimum value (No), then it is determined that the rotation speed of the refrigerant compressor 10 can be decreased, and the process proceeds to step S70 to decrease the rotation speed (down) of the refrigerant compressor, and the process returns to step S40. Thus, as the supply amount of the refrigerant from the refrigerant compressor 10 to the first heat exchanger 20 decreases, the discharge temperature T1 of air conditioning air A to be introduced from the blowing opening M into the vehicle interior C can be decreased.

In step S60, if the control section 100 determines that the rotation speed of the refrigerant compressor 10 is the minimum value (Yes), in other words, if it is determined that the rotation speed of the refrigerant compressor 10 cannot be decreased any more, then the process proceeds to step S80 to release collaborated operation between the first blower 80 and the second blower 90. That is, the voltage of the first blower 80 is maintained as it is, while the voltage of the second blower 90 is decreased (down). By decreasing the voltage (electrical power) supplied to the second blower 90, the flow rate of air conditioning air A to be introduced from the vehicle interior C to the third heat exchanger 50 decreases.

Thus, as the heat absorption amount of the refrigerant at the third heat exchanger 50 decreases, the heat absorption amount at the fourth heat exchanger 60 decreases, and the heat discharge amount at the first heat exchanger 20 decreases. In such a manner, by decreasing the voltage of the second blower 90, it is possible to decrease the temperature of air conditioning air A to be introduced from the blowing opening M into the vehicle interior C.

Then, the process proceeds to step S90, and the control section 100 checks the current capacity of dehumidification heating operation. The capacity is determined, based on the discharge temperature T1 at the blowing opening M, and is set, for example, to 40°C (the second predetermined temperature). In such a manner, by setting the second predetermined temperature to be lower than the first predetermined temperature, it is possible to prevent a phenomenon (hunting) that the process whether or not the capacity is excessive is frequently switched.

In step S90, if the control section 100 determines that the capacity is excessive (namely, if the discharge temperature T1 is exceeding 40°C), then the process returns to step S80 to decrease the voltage of the second blower 90: if the control section 100 determines that the capacity is appropriate (namely, if the T1 is higher than or equal to 20°C and lower than or equal to 40°C), the process proceeds to step S130 to continue operation with the capacity as it is; and if the capacity is not enough (namely, if the discharge temperature T1 is lower than 20°C), then the process proceeds to S100.

In step S100, the control section 100 determines whether or not the voltage of the second blower 90 is the maximum (MAX), and if the voltage of the second blower 90 is determined to be not the maximum (MAX) (No), then the process proceeds to step S110 to increase (up) the voltage of the second blower 90 and returns to step S90.

In step S100, if the control section 100 determines that the voltage of the second blower 90 is the maximum (Yes), that is, the control section 100 determines that the flow rate by the second blower 90 cannot be increased any more, then the step returns to step S120 to increase (up) the rotation speed of the refrigerant compressor 10. By increasing the rotation speed of the refrigerant compressor 10, the heat discharge amount at the first heat exchanger 20 increases, and the discharge temperature T1 of air conditioning air A from the blowing opening M can be increased.

On the other hand, in step S10, if the control section 100 determines that dehumidification heating operation is not performed (No), the process proceeds to S200, and the control section 100 determines whether or not dehumidification cooling operation is performed. Whether or not dehumidification cooling operation is performed may be determined by detecting a fact that the driver has switched the mode change switch to the dehumidification heating operation, or may be determined by a fact that the dehumidification heating operation mode has been set in the total control of the air conditioning system F1.

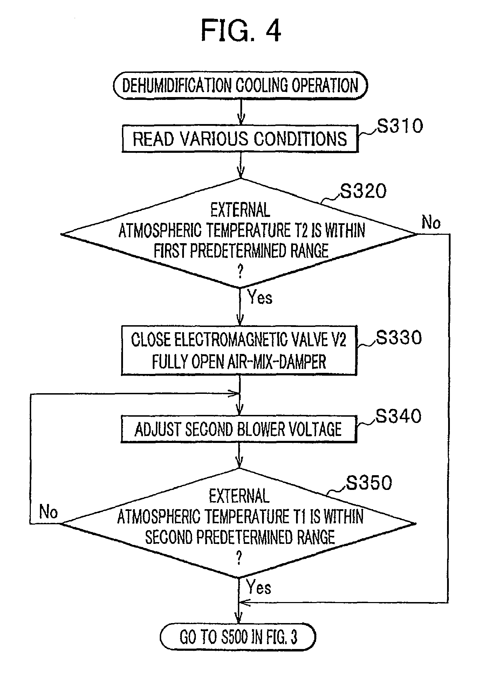

In step S200, if the control section 100 determines that dehumidification cooling operation is performed (Yes), the process proceeds to step S300, and moves to the processing for dehumidification cooling operation, shown in FIG. 4, and if the control section 100 determines that dehumidification cooling operation is not performed (No), then the process proceeds to step S400 to perform operation in another designated mode that has been set by switching or control. Another designated mode refers to heating operation or cooling operation.

Then, the process proceeds to step S500, and the control section 100 determines whether or not the operation of the air conditioning system F1 is terminated. If it is determined that the operation is not terminated yet (No), then the process returns to step S10, and if it is determined that the operation is terminated (Yes), then the operation of the air conditioning system F1 is terminated.

If the control section 100 determines, in step S300, that dehumidification cooling operation is performed, the control section 100 reads, in step S310, as shown in FIG. 4, various conditions and stores the conditions into the memory. Various conditions herein refer to the discharge pressure (refrigerant discharge pressure), the discharge temperature (blowing temperature) T1, the external atmospheric temperature T2, and the like of the refrigerant compressor 10.

Then, the process proceeds to step S320, and the control section 100 determines whether or not the external atmospheric temperature (the temperature outside the vehicle) T2 is within the first predetermined range. The first predetermined range herein refers to a temperature range that is difficult for a conventional heat pump air conditioning system to set, and is set, for example, to 20-25°C.

If the control section 100 determines, in step S320, that the external atmospheric temperature T2 is not within the first predetermined range (No), the process returns to step S500, and if the control section 100 determines that the eternal atmospheric temperature T2 is within the first predetermined range (Yes), the process proceeds to step S330.

In step S330, the control section 100 closes the electromagnetic valve V2 and sets the air mix damper 74 to be fully open. That is, if the eternal atmospheric temperature T2 is within the first predetermined range, the control section 100 performs control to switch from dehumidification cooling operation to dehumidification heating operation.

Then, in step S340, the control section 100 adjusts the voltage of the second blower 90. By decreasing the voltage of the second blower 90, the heat absorption amount at the third heat exchanger 50 decreases, as described above. Accordingly, it is possible to decrease the heat discharge amount at the first heat exchanger 20, and decrease the discharge temperature T1 of air conditioning air A discharged from the blowing opening M. On the other hand, by increasing the voltage of the second blower 90, the heat absorption amount at the third heat exchanger 50 increases. Accordingly, it is possible to increase the heat discharge amount at the first heat exchanger 20, and increase the discharge temperature T1 of air conditioning air A discharged from the blowing opening M.

Then, in step S350, the control section 100 determines whether or not the discharge temperature T1 of air conditioning air A from the blowing opening M is within the second predetermined range. The second predetermined range herein is set to be a range wider than the first predetermined range, and is set, for example, to 20-30°C. If the control section 100 determines that the discharge temperature T1 is not within the second predetermined range (No), then the process returns to step S340, and the control section 100 adjusts the voltage of the second blower 90.

In step S350, if the control section 100 determines that the discharge temperature T1 of air conditioning air A from the blowing opening M is within the second predetermined range (Yes), the process returns to step S500 in FIG. 3. In step S500, the control section 100 determines whether or not the operation of the air conditioning system F1 is terminated. If it is determined that the operation is not terminated (No), the process returns to step S10, and if it is determined that the operation is terminated (Yes), then the series of processes is terminated.

As described above, the air conditioning system F1 in the present embodiment adjusts the flow rate of the second blower 90 in association with the flow rate of the first blower 80 in normal dehumidification heating operation, however, in case that conditions that the discharge temperature T1 is higher than the first predetermined temperature (Yes in step S50, an excessive capacity) and that the rotation speed of the refrigerant compressor 10 is lower than the predetermined rotation speed (Yes in step S60) have occurred, the collaborated operation between the second blower 90 and the first blower 80 is released and the voltage (electrical power) of the second blower 90 is independently controlled, and the absorption amount at the third heat exchanger 50 can be decreased. Thus, the heat discharge amount at the first heat exchanger 20 decreases, and it is thereby possible to adjust the discharge temperature T1 from the first heat exchanger 20 to an optimum temperature (a predetermined temperature, for example, 40°C).

In such a manner, as the absorption amount can be ensured by absorbing heat at the third heat exchanger 50 and the fourth heat exchanger 60 and further the flow rate at the first blower 80 is not caused to decrease, the heat discharge amount at the first heat exchanger 20 and the dehumidification amount at the fourth heat exchanger can be ensured. Accordingly, by the air conditioning system F1 having the same path common to heating operation and cooling operation, it is possible to adjust the discharge temperature T1 from the blowing opening M to an appropriate temperature without using an electrical heater (a PTC heater or the like) in dehumidification heating operation. Further, without using an electrical heater, in a state of minimizing the output from the refrigerant compressor 10, as it is also possible to restrict the electrical power for the second blower 90 to a minimum limit, it is possible to reduce the consumption electrical power to thereby effectively use electrical power.

Incidentally, in case that the discharge temperature T1 from the blowing opening M becomes lower than the predetermined temperature and the voltage of the second blower 90 is not the maximum (MAX), it is possible, by increasing the voltage of the second blower 90, to increase the heat absorption amount at the third heat exchanger 50 and increase the discharge temperature T1 to an appropriate temperature (the predetermined temperature, for example, 40°C).

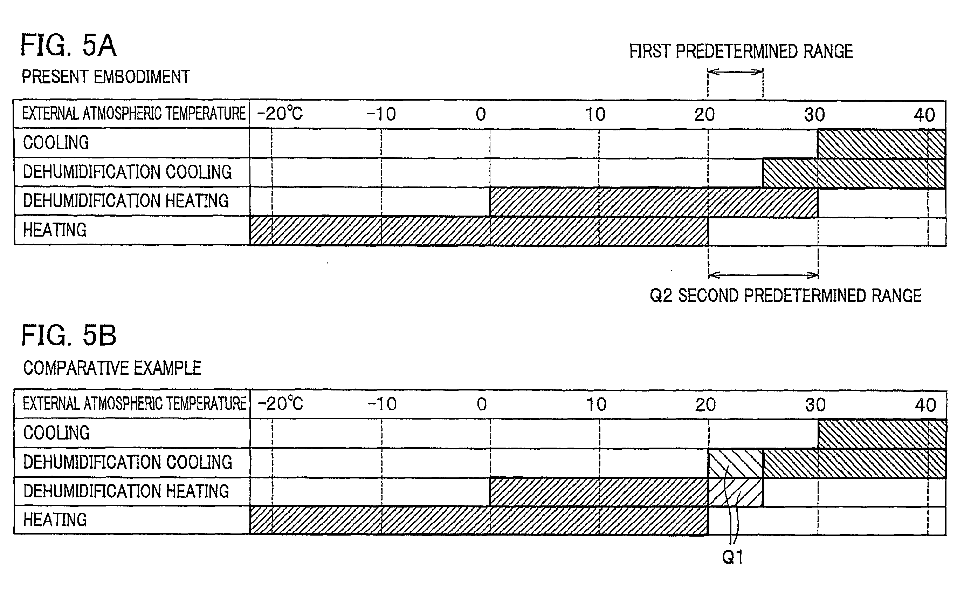

As shown in FIG. 5B, by a conventional heat pump air conditioning system, which always performs collaborated operation between the first blower 80 and the second blower 90, in case that the external atmospheric temperature is in the first predetermined range, it is difficult to enable collaborated operation always in dehumidification cooling operation and dehumidification heating operation, as represented by symbol Q1. By the air conditioning system F1 in the present embodiment, as shown in FIG. 5A, in case that the external atmospheric temperature T2 is within the first predetermined range in dehumidification cooling operation, by switching from dehumidification cooling operation to dehumidification heating operation to cause air conditioning air A (refrigerant) to flow through the third heat exchanger 50 and by adjusting the voltage (electrical power) of the second blower 90 to control the discharge temperature T1 to be within the second predetermined range, it is possible, by dehumidification heating operation, to respond even to a region Q2 (the external atmospheric temperature is 25-30°C) that would be responded conventionally by dehumidification cooling operation which requires control of the air mix damper 74 (cooling-heating switching device).

The present invention is not limited to the foregoing embodiment. For example, although the present invention has been described above about states in which the air mix damper 74 is either fully opened or fully closed, the air mix damper 74 may be adjusted to a middle position (an intermediate position) so as to obtain a middle temperature between temperature in dehumidification heating operation and temperature in dehumidification cooling operation.

### Reference Symbols

- 10:: refrigerant compressor
- 20:: first heat exchanger
- 30:: second heat exchanger
- 40:: expansion valve (depressurizing unit)
- 50:: third heat exchanger
- 60:: fourth heat exchanger
- 70:: cooling-heating switching unit
- 71:: second heat exchanger bypass unit
- 72:: third heat exchanger bypass unit
- 73:: fourth heat exchanger bypass unit
- 74:: air mix damper
- 80:: first blower
- 90:: second blower
- 100:: control section
- 101:: discharge temperature sensor
- 102:: external atmospheric temperature sensor
- C:: vehicle interior
- F1:: heat pump air conditioning system for vehicle
- V:: vehicle

## Claims

1. A heat pump air conditioning system for a vehicle (F1), comprising:
a refrigerant compressor (10);
a first heat exchanger (20), for heat discharge, that performs heat exchange between a refrigerant discharged from the refrigerant compressor and a heat medium;
a second heat exchanger (30), for heat discharge, that is disposed downstream of the first heat exchanger and performs heat exchange between the refrigerant discharged from the refrigerant compressor and external atmospheric air;
a depressurizing unit (40) that is disposed downstream of the second heat exchanger (30) and decreases a pressure of the refrigerant;
a third heat exchanger (50), for heat absorption, that is disposed downstream of the depressurizing unit (40) and performs heat exchange between a heat source and the refrigerant;
a fourth heat exchanger (60), for heat absorption, that is disposed on an upstream side of the first heat exchanger (20) with respect to a flow of the heat medium introduced to the first heat exchanger;
a cooling-heating switching unit (70) for switching between a flow of the refrigerant and the heat medium in cooling operation and a flow of the refrigerant and the heat medium in heating operation;
a first blower (80) for sending the heat medium to the first heat exchanger and the fourth heat exchanger (60);
a second blower (90) for sending the heat medium from the heat source to the third heat exchanger (50); and
a control section (100) for controlling the refrigerant compressor (10), the cooling-heating switching unit (70), the first blower (80), and the second blower (90), **characterized in that**
the control section (100) performs collaborated operation of the second blower (90) in association with the first blower (80) in dehumidification heating operation in which the refrigerant passes through the fourth heat exchanger (60) after the refrigerant passes through the third heat exchanger (50), and if a discharge temperature of the heat medium from the first heat exchanger (20) is higher than a first predetermined temperature and a rotation speed of the refrigerant compressor (10) is lower than a predetermined rotation speed, the control section releases the collaborated operation between the first blower (80) and the second blower (90) to adjust an electrical power for the second blower (90) and thereby makes the discharge temperature become lower than a second predetermined temperature.

2. The heat pump air conditioning system according to claim 1,
wherein, if an external atmospheric temperature is within a first predetermined range in dehumidification cooling operation, the control section (100) switches the dehumidification cooling operation to the dehumidification heating operation to make the refrigerant flow through the third heat exchanger (50) and adjusts the electrical power for the second blower (90), to thereby control the discharge temperature to be within a second predetermined range.

## Patentansprüche

1. Wärmepumpe-Klimaanlage-System für ein Fahrzeug (F1), umfassend:
einen Kühlmittelkompressor (10);
einen ersten Wärmetauscher (20) zur Wärmeabgabe, welcher einen Wärmeaustausch zwischen einem von dem Kühlmittelkompressor abgegeben Kühlmittel und einen Wärmemedium ausführt;
einen zweiten Wärmetauscher (30) zur Wärmeabgabe, welcher stromabwärts des ersten Wärmetauscher angeordnet ist und einen Wärmeaustausch zwischen dem von dem Kühlmittelkompressor abgegeben Kühlmittel und externer atmosphärischer Luft ausführt;
eine Druckabsenkeinheit (40), welche stromabwärts des zweiten Wärmetauschers (30) angeordnet ist und einen Druck des Kühlmittels herabsetzt;
einen dritten Wärmetauscher (50) zur Wärmeabsorption, welcher stromabwärts der Druckabsenkeinheit (40) angeordnet ist und einen Wärmeaustausch zwischen einer Wärmequelle und dem Kühlmittel ausführt;
einen vierten Wärmetauscher (60) zur Wärmeabsorption, welcher auf einer bezüglich einer Strömung des Wärmemediums, welches in den ersten Wärmetauscher eingeführt wird, stromaufwärtigen Seite des ersten Wärmetauscher (20), angeordnet ist;
eine Kühlen-Heizen-Schalteinheit (70) zum Schalten zwischen einer Strömung des Kühlmittels und des Wärmemediums in einem Kühlbetrieb und einer Strömung des Kühlmittels und des Wärmemediums in einem Heizbetrieb;
ein erstes Gebläse (80) zum Senden des Wärmemediums zu dem ersten Wärmetauscher und dem vierten Wärmetauscher (60);
ein zweites Gebläse (90) zum Senden des Wärmemediums von der Wärmequelle zu dem dritten Wärmetauscher (50); und
einen Regelungs-/Steuerungsabschnitt (100) zum Regeln/Steuern des Kühlmittelkompressors (10), der Kühlen-Heizen-Schalteinheit (70),des ersten Gebläses (80) und des zweiten Gebläses (90),
**dadurch gekennzeichnet, dass** der Regelungs-/Steuerungsabschnitt (100) einen zusammenwirkenden Betrieb des zweiten Gebläses (90) in Zusammenarbeit mit dem ersten Gebläse (80) bei einem Entfeuchtung-Heizen-Betrieb, in welchem das Kühlmittel durch den vierten Wärmetauscher (60) hindurchläuft, nachdem das Kühlmittel durch den dritten Wärmetauscher (50) hindurchgelaufen ist und, wenn eine Abgabetemperatur des Wärmemediums von dem ersten Wärmetauscher (20) höher ist als eine erste vorbestimmte Temperatur und eine Rotationsgeschwindigkeit des Kühlmittelkompressors (10) geringer ist als eine vorbestimmte Rotationsgeschwindigkeit, der Regelungs-/Steuerungsabschnitt den zusammenwirkenden Betrieb zwischen dem ersten Gebläse (80) und dem zweiten Gebläse (90) auslöst, um eine elektrische Leistung für das zweite Gebläse (90) anzupassen und veranlasst dadurch, dass die Abgabetemperatur niedriger als eine zweite vorbestimmte Temperatur wird.

2. Wärmepumpe-Klimaanlage-System nach Anspruch 1,
wobei, wenn eine externe atmosphärische Temperatur innerhalb eines ersten vorbestimmten Bereichs bei einem Entfeuchtung-Kühlen-Betrieb ist, der Regelungs-/Steuerungsabschnitt (100) den Entfeuchtung-Kühlen-Betrieb auf den Entfeuchtung-Heizen-Betrieb schaltet, um die Kühlmittelströmung durch den dritten Wärmetauscher (50) zu veranlassen und die elektrische Leistung für das zweite Gebläse (90) anzupassen, um dadurch die Abgabetemperatur zu steuern/regeln, um innerhalb eines zweiten vorbestimmten Bereichs zu sein.

## Revendications

1. Un système de climatisation à pompe à chaleur pour un véhicule (71), compreriant :
un compresseur de réfrigérant (10) ;
un premier échangeur de chaleur (20) pour la décharge de chaleur qui procède à l'échange de chaleur entre un réfrigérant déchargé du compresseur de réfrigérant et un agent chauffant ;
un deuxième échangeur de chaleur (30) pour la décharge de chaleur qui est disposé en aval du premier échangeur de chaleur et procède à un échange de chaleur entre le réfrigérant déchargé du compresseur de réfrigérant et l'air atmosphérique externe ;
une unité de dépressurisation (40) qui est disposée en aval du deuxième échangeur de chaleur (30) et diminue une pression du réfrigérant ;
un troisième échangeur de chaleur (50) pour l'absorption de chaleur qui est disposé en aval de l'unité de dépressurisation (40) et procède à un échange de chaleur entre une source de chaleur et le réfrigérant ;
un quatrième échangeur de chaleur (60) pour l'absorption de chaleur qui est disposé du côté amont du premier échangeur de chaleur (20) par rapport à un flux de l'agent chauffant introduit dans le premier échangeur de chaleur ;
une unité de commutation refroidissement/chauffage (70) pour la commutation entre un flux de réfrigérant et l'agent chauffant dans une opération de refroidissement et un flux du réfrigérant et le milieu de chaleur dans une opération de chauffage ;
un premier ventilateur (80) pour envoyer l'agent chauffant vers le premier échangeur de chaleur et le quatrième échangeur de chaleur (60) ;
un deuxième ventilateur (90) pour envoyer l'agent chauffant de la source de chaleur vers le troisième échangeur de chaleur (50) ; et
une section de commande (100) pour commander le compresseur du réfrigérant (10),
l'unité de commutation refroidissement/chauffage (70), le premier ventilateur (80) et le deuxième ventilateur (90),
**caractérisé en ce**
**que** la section de commande (100) procède à un fonctionnement collaboratif du deuxième ventilateur (90) en association avec le premier ventilateur (80) dans une opération de chauffage de déshumidification dans lequel le réfrigérant passe par le quatrième échangeur de chaleur (60) après le passage du réfrigérant par le troisième échangeur de chaleur (50) et, si une température de décharge du milieu de chaleur à partir du premier échangeur de chaleur (20) est supérieure à une première température préalablement déterminée et une vitesse de rotation du compresseur du réfrigérant (10) est inférieure à une vitesse de rotation préalablement déterminée, la section de commande libère le fonctionnement collaboratif entre le premier ventilateur (80) et le deuxième ventilateur (90) afin de régler une puissance électrique pour le deuxième ventilateur (90) et, dans ce cas, rend la température de décharge inférieure à une deuxième température préalablement déterminée.

2. Le système de conditionnement d'air à pompe à chaleur selon la revendication 1, dans lequel, si une température atmosphérique externe est située dans une première gamme préalablement déterminée dans l'opération de refroidissement de déshumidification, la section de commande (100) commute le fonctionnement de refroidissement de déshumidification en fonctionnement de chauffage de déshumidification pour faire circuler le flux du réfrigérant par le troisième échangeur de chaleur (50) et ajuste la puissance électrique pour le deuxième ventilateur (90) afin de commander ainsi la température de décharge pour qu'elle se situe dans une deuxième gamme préalablement déterminée.
